# EUROPEAN PATENT APPLICATION

(11) **EP 1 633 133 A2**
(43) Date of publication of application: **08.03.2006**
(21) Application number: 04255708.2
(22) Date of filing: 20.09.2004
(51) Int. Cl.: H04N 5/44

(54) **Portable apparatus for enabling reproduction of television**

(30) Priority: 01.09.2004 WO PCT/SG20/04000276
(71) Applicant: Trek 2000 International Ltd, Singapore 508769 (SG)
(72) Inventor: Poo, Teng Pin, Singapore 460044 (SG); Tan, Henry, Singapore 456458 (SG)
(74) Representative: Finnie, Peter John

(57) **Abstract**

Apparatus for enabling reproduction of television on a host. The apparatus comprises an interface to allow power to be supplied to the apparatus from the host, executable commands signals to be received by the apparatus from the host, and processed television signals to be sent to the host from the apparatus. Also provided is a non-volatile memory; and a micro control unit for processing the control signals and for sending the processed television signals, as well as controlling the non-volatile memory. The apparatus further comprises a television tuner for receiving television signals, processing the received television in accordance with executable commands received from the host, and sending the processed television signals to the micro control unit for sending to the host.

## Description

### Field of the invention

The present invention relates to a portable apparatus for enabling reproduction of broadcasts and refers particularly, through not exclusively, to such apparatus for enabling viewing of television and listening to FM radio.

### Background of the Invention

The use of computers, particularly personal computers, laptop computers, notebook computers, tablet computers, and so forth as an entertainment and communications centre is becoming more widespread. It is even possible to use a computer as a television and/or radio receiver so that television programs can be viewed (and heard) using the computer. Similarly for radio, particularly FM radio.

However, many computers don't have the necessary television tuner card built in. To add such a card requires some skills and experience. The necessary software and driver must also be installed. Also, once installed the cards are somewhat difficult to remove.

### Summary of the Invention

In accordance with a first aspect there is provided a portable apparatus for enabling reproduction of television on a host. The apparatus comprises an interface to allow power to be supplied to the apparatus from the host, control signals to be received by the apparatus from the host, and television signals to be sent to the host from the apparatus. Also provided are a non-volatile memory; and a micro control unit for processing the control signals and sending the media signals, as well as controlling the non-volatile memory. Furthermore, there is provided a television tuner for receiving television signals, processing the received television signals in accordance with executable commands received from the host, and sending the processed television signals to the micro control unit for sending to the host.

The apparatus may further comprise an FM radio tuner for receiving FM radio signals, converting the received radio signals to digital radio signals, and passing the digitized radio signals to the micro control unit for sending to the host

The apparatus may further comprise an analog-to-digital converter for converting received television signals to digitized television signals. The analog-to-digital converter may be part of the television tuner.

The apparatus may further comprise a second analog-to-digital converter for converting the received FM radio signal to digitized radio signal. The second analog-to-dgital converter may be part of the FM radio tuner. There may be connector socket to enable there to be a connection to the apparatus from one of: an antenna, a broadcast cable. The antenna may be part of the apparatus.

The non-volatile memory may be for storage of interface software for the interface. The non-volatile memory may be for storage of application software for the television tuner and the FM radio tuner. The interface may be USB or IEEE 1394 connector.

The apparatus may also be able to receive a television signal and perform at least one further function on the received television signal including, but not limited to, re-code, compression, and storage in the non-volatile memory and/or the host non-volatile memory. The further function may be performed using or with the assistance of the host processing systems. Compression may be by any suitable compression system including, for example, MPEG, MP3, and so forth. Preferably, the received television signal data is compressed before storage.

### Brief Description of the Drawings

In order that the present invention may be fully understood and readily put into practical effect, there shall now be described by way of non-limitative example only preferred embodiments of the present invention, the description being with reference to the accompanying illustrative drawings in which:
Figure 1 is an illustrative view of a computer system for use with the preferred embodiment to perform the method;
Figure 2 is a perspective view of a preferred form of apparatus;
Figure 3 is a block diagram of the apparatus of Figure 2; and
Figure 4 is a flow chart for the performance of the method.

### Detailed Description of the Preferred Embodiments

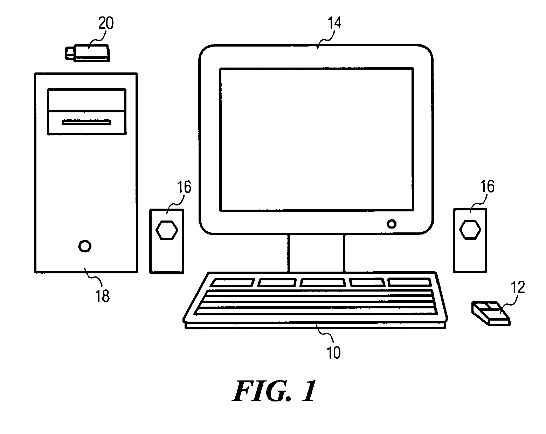

To refer to Figure 1, there is shown a relatively normal computer system comprising a keyboard 10, mouse 12, LCD monitor 14, speakers 16, and CPU 18. The various components may be connected by cables, or wirelessly. To be used with the computer system is an apparatus 20.

The computer system may also be a laptop computer, notebook computer, tablet computer, hand held device, or the like.

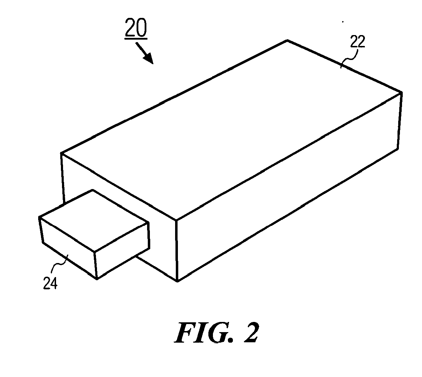

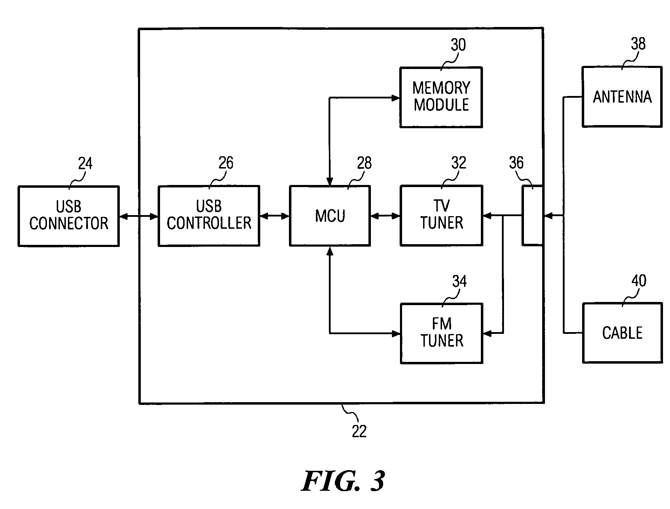

The apparatus 20 is more fully illustrated in Figure 2 and 3.

The apparatus 20 comprises a body 22 and a interface 24. The interface 24 may be an IEEE 1394 or USB interface. By using such interfaces power is supplied to apparatus 20 from host 18, and sufficient lines are available to allow for sending control instructions from host 18 to apparatus 20 and for data to be sent between apparatus 20 and host 18. Host 18 will also treat apparatus 20 as an external drive and will therefore be able to receive the digitized television and radio signals from apparatus 20.

The apparatus 20 has a controller 26 for controlling the interface 24, a micro control unit 28, memory module 30, television tuner 32, FM radio tuner 34, and a connector socket 36. The connector socket 36 is to enable connections from either or both of an antenna 38 and cable 40. However, the antenna 38 may form part of the apparatus 20, if required or desired. Alternatively, the television and/or radio signals may be received wirelessly by the host 18 using a known wireless connection. In that case the television and/or radio signals are passed to tuners 32, 34 through interface 24 and controller 26. Memory 30 is a non-volatile memory and may be flash memory or a disk drive.

The interface controller 26 operates in a known manner. The micro controller 28 receives commands from the host 18 through the controller 26 and translates those commands into executable functions. Those commands and thus the executable functions, may be, for example, to activate the television tuner 32 to enable television signals to be received and shown on monitor 14, and the audio reproduced through speakers 16 via a sound card in or connected to host 18.

If the television tuner 32 is in operation, executable commands may also include television channel selection. Channels may be preset, or able to be user set using keyboard 10 and/or mouse 12. Alternatively, they may be found by a scan functionality within tuner 34. This will allow apparatus 20 to be used worldwide, and apparatus 20 to be used in different locations with different television broadcast frequencies. Other executable commands may be included to change from television tuner 32 to FM radio tuner 34 to select radio stations, and so forth. The micro control unit 28 also controls data to and from memory 30, and file management.

The micro controller 28 receives audio and video information from television tuner 32 and transfers it to the host 18. The television tuner 32 receives signals from antenna 38 or cable 40 or wirelessly via interface 24. The signals may be one or more of: digital, PAL or NTSC. The television tuner 32 will include an analog-to-digital converter to convert to digital received analog signals. The digitized or digital signal is then processed by the television tuner 32 and micro control unit 28 and passed to host 18.

FM audio is also received by FM tuner 34 from antenna 38 or cable 40 in wirelessly via interface 24. The FM tuner 34 includes an analog-to-digital converter to convert the analog signal to digital audio. The tuner 34 then process the signal and passes it to the micro control unit 28 that in turn passes it to host 18.

Host 18 is used to control the television channel selection by controlling television tuner 32, and to control the FM radio station selection by controlling FM tuner 34.

The memory 30 can not only act as a non-volatile data storage, but can also store interface software and application software. More particularly, it can store the application software for tuners 32, 34.

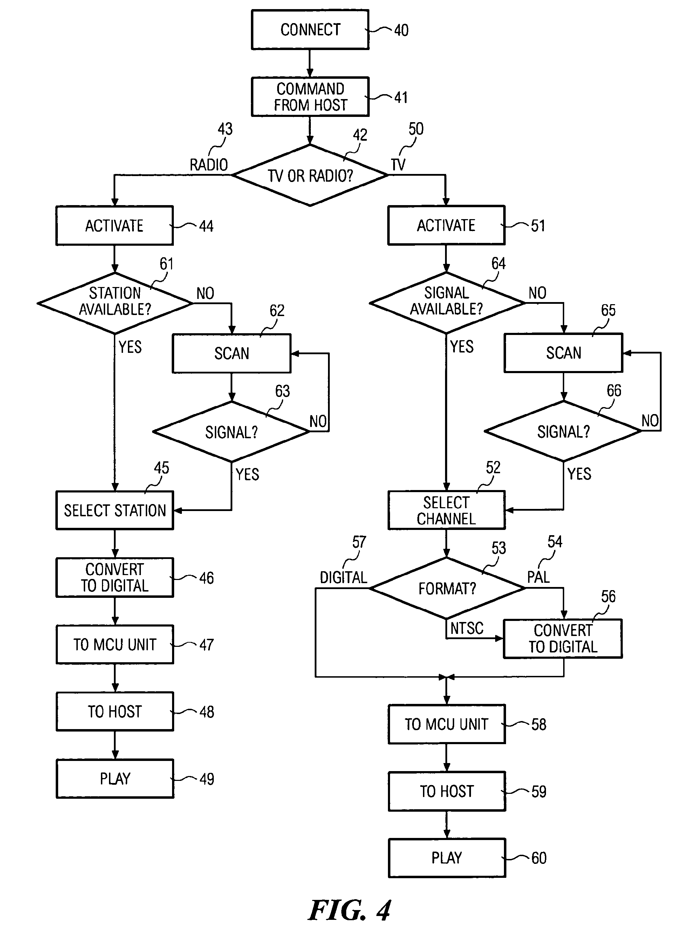

Figure 4 shows the process flow. Upon apparatus 20 being connected to host 18 (40) and a command being received from host 18 (41) application software for tuners 32, 34 is downloaded from memory 30. A query is then raised (42) to determine if the command is for the FM radio tuner 34 or television tuner 32.

If radio (43), the FM radio tuner 34 is activated (44). If no previous station selection is available (61), or there is no signal at that frequency, the tuner 34 scans the FM frequency range from the lowest frequency range progressively to the highest (62) until there is a satisfactory signal (63). The desired station may be selected according to user input (45). If no station is selected, the previously selected station may be used. The analog radio signal is received from antenna 38 or interface 24 and converted to digital (46), passed to micro control unit 28, and then passed to host 18 (48) where it can be processed by the sound card of host 18 and reproduced (49) over speakers 16 (or headphones).

If television (50) at (42), the television tuner 32 is activated (57). If a signal is not available at (64), or a previous station selection is not available at that frequency, the tuner 32 scans the television frequency range (65) from the lowest frequency range to the highest frequency range until there is a satisfactory signal (66). Additionally or alternatively, a desired channel (52) may be input by use of host 18. If no channel is input, the previously selected channel may be used. A query is then raised as to the format of the received television signal (53). If PAL (54) or NTSC (55) it is converted to digital (56) and passed to micro control unit 28 (58). It digital (57) it is passed directly to micro control unit 28 at (58). From micro control unit 28 it is passed to host 18 (59) and reproduced (60) on monitor 14 and over speakers 16 (or headphones).

That part of memory 30 not used for interface software and application software, may be used for data storage in a known manner. Controller 28 controls the register of memory 30 and will not allow the interface software and application software to be overwritten. Upon receiving data from host 18 that is not a command for television and/or radio (i.e. step 41 on Figure 4), the controller 28 treats the data in the normal manner for an external drive.

The apparatus 20 may be able to receive a television signal and perform at least one further function on the received television signal. The further function may include, but is not limited to, re-code, compression, and storage in the non-volatile memory and/or the host non-volatile memory. The further function may be performed using, or with the assistance of, the host 18 processing systems. Compression may be by any suitable compression system including, for example, MPEG, MP3, and so forth. Preferably, the received television signal data is compressed before storage.

Whilst there has been described in the foregoing description preferred embodiments of the present invention, it will be understood by those skilled in the technology concerned that many variations or modifications in details of design or construction may be made without departing from the present invention.

## Claims

1. A portable apparatus for enabling reproduction of television on a host, the apparatus comprising:
(a) an interface to allow power to be supplied to the apparatus from the host, executable commands to be received by the apparatus from the host, and processed television signals to be sent to the host from the apparatus;
(b) a non-volatile memory,
(c) a micro control unit for processing the control signals and for sending processed television signals, as well as for controlling the non-volatile memory; and
(d) a television tuner for receiving television signals, processing the received television signals in accordance with executable commands received from the host and sending the processed television signals to the micro control unit for sending to the host.

2. A portable apparatus for enabling reproduction of television on a host, the apparatus comprising:
(a) an interface to allow power to be supplied to the apparatus from the host, executable commands to be received by the apparatus from the host, and processed television signals to be sent to the host from the apparatus;
(b) a television tuner for receiving television signals, processing the received television signals in accordance with the executable commands received from the host, and sending the processed television signals to the host;
(c) a non-volatile memory for storing application software for the television tuner, the application software being downloaded to the television tuner upon receipt of a required executable command from the host.

3. Apparatus as claimed in claim 1 or claim 2, further comprising an FM radio tuner for receiving FM radio signals, converting the received radio signals to digital radio signals, and passing the digital radio signals to the micro control unit.

4. Apparatus as claimed in any one of claims 1 to 3, further comprising an analog-to-digital converter for converting the received television signals to digitized television signals.

5. Apparatus as claimed in claim 4, wherein the analog-to-digital converter is part of the television tuner.

6. Apparatus as claimed in any one of the claims 1 to 5, further comprising a connector socket to enable there to be a connection to the apparatus from one of: an antenna, a broadcast cable.

7. Apparatus as claimed in any one of claim 6, wherein the antenna is part of the apparatus.

8. Apparatus as claimed in any one of daims 1 to 7, wherein the non-volatile memory is for storage of interface software for the interface, the interface being selected from the group comprising: USB and IEEE 1394.

9. Apparatus as claimed in claim 1, or any one of claims 3 to 8 when appended to claim 1, wherein the non-volatile memory is for the storage of application software for the television tuner.

10. Apparatus as claimed in claim 9, wherein the application software is downloaded to the television tuner upon receipt of a required executable command from the host.

11. Apparatus as claimed in any one of daims 1 to 10, wherein the television tuner includes a scan function for scanning television frequencies.

12. Apparatus as claimed in claim 3 or any one of claims 4 to 11 when appended to claim 3, wherein the FM radio tuner further comprises an anatog-to-digitat converter.

13. Apparatus as claimed in claim 3, or any one of claims 4 to 12 when appended to claim 3, wherein the FM radio tuner Includes a scan function for scanning FM radio frequencies.

14. Apparatus as claimed in any one of claims 1 to 13, wherein the apparatus is able to perform at least one further function on the received television signal, the at least one further function being selected from the group consisting of: re-coding, compression, storage in the non-volatile memory, and storage in the host non-volatile memory.

15. Apparatus as claimed in claim 14, wherein the at least one further function is be performed using the host processing systems.

16. Apparatus as claimed in claim 14 or claim 15, wherein the received television signal is compressed before storage.

17. A method for enabling reproduction of television on a host by use of a portable apparatus, the method comprising:
(a) activating a television tuner of the portable apparatus;
(b) downloading application software to the television tuner from a non-volatile memory of the portable apparatus;
(c) receiving and processing television signals at the television tuner; and
(d) sending the processed television signals to the host for reproduction by the host.

18. A method for enabling reproduction of television on of host by use of portable apparatus, the method comprising:
(a) connecting the portable apparatus to the host by use of an interface to allow power to be supplied to the apparatus from the host, executable command to be received by the apparatus from the host, and processed television signals to be sent to the host from the apparatus;
(b) receiving television signals at a television tuner of the apparatus;
(c) processing the received television signals in the television tuner in accordance with executable commands received from the host, and sending the processed television signals from the television tuner to the host.

19. A method as claimed in claim 18, wherein application software for the television tuner is stored in a non-volatile memory of the portable apparatus, the application software being downloaded to the television tuner following the connecting of the portable apparatus to the host and receipt by the apparatus of a required executable command from the host.

20. A method as claimed in any one of claims 17 to 19, wherein the processing of the received television signals comprises digitizing the received television signals.

21. A method as claimed in any one of claims 17 to 20, wherein television station selection is by one or more of: executable command from the host or scanning by the television tuner.

22. A method as claimed in any one of daims 17 to 21. wherein the received television signals are in a format selected from the group consisting of: digital, PAL and NTSC.

23. A method as claimed in any one of claims 19 to 22, further including performing at least one further function on the received television signal, the at least one further function comprising at least one of: re-coding, compression, storage in the non-volatile memory, and storage in the host non-volatile memory.

24. A method as claimed in claim 23, wherein the further function is performed using or with the assistance of the host processing systems.

25. A method as claimed in claim 23 or claim 24, wherein the received television signal data is compressed before storage.
